(19) Europäisches Patentamt
European Patent Office
Office européen des brevets

(11) EP 2 593 368 B1

(12) FASCICULE DE BREVET EUROPEEN

(45) Date de publication et mention
de la délivrance du brevet:
**26.09.2018 Bulletin 2018/39**

(21) Numéro de dépôt: **11733827.7**

(22) Date de dépôt: **08.07.2011**

(51) Int Cl.:
*B64G 3/00* *(2006.01)*        *G01C 11/02* *(2006.01)*
*G01V 8/00* *(2006.01)*        *G02B 17/06* *(2006.01)*
*G02B 23/06* *(2006.01)*

(86) Numéro de dépôt international:
**PCT/EP2011/061570**

(87) Numéro de publication internationale:
**WO 2012/007362 (19.01.2012 Gazette 2012/03)**

(54) **PROCEDE DE REALISATION D'UN SYSTEME DE VEILLE SPATIALE POUR LA SURVEILLANCE DE L'ESPACE PROCHE**

VERFAHREN ZUR REALISATION EINES WELTRAUMÜBERWACHUNGSSYSTEMS ZUM ÜBERWACHEN DES ERDNAHEN RAUMES

METHOD OF REALISATION OF A SPACE SURVEILLANCE SYSTEM FOR SURVEYING THE NEAR SPACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2010 FR 1055657**

(43) Date de publication de la demande:
**22.05.2013 Bulletin 2013/21**

(73) Titulaire: **ArianeGroup SAS**
**75015 Paris (FR)**

(72) Inventeurs:
• **MARTIN, Bernard**
  **F-33600 Pessac (FR)**
• **LE BERRE, François**
  **F-78800 Houilles (FR)**
• **CAILLAU, Damien**
  **F-33160 Saint Médard en Jalles (FR)**
• **LEVEQUE, Louis**
  **F-27930 Cierrey (FR)**

(74) Mandataire: **Ipside**
**7-9 Allées Haussmann**
**33300 Bordeaux Cedex (FR)**

(56) Documents cités:
**US-B1- 7 105 791**

• **NICHOLAS L. JOHNSON: "U.S. Space Surveillance", ADVANCES IN SPACE RESEARCH, vol. 13, no. 8, août 1993 (1993-08), pages 5-20, XP002617664, DOI: 10.1016/0273-1177(93)90563-Q**
• **A. E. POTTER: "Ground-Based Optical Observations of Orbital Debris: A Review", ADVANCES IN SPACE RESEARCH, vol. 16, no. 11, 1995, pages 35-45, XP002617665, DOI: 10.1016/0273-1177(95)98751-9**
• **ROBERT Q. FUGATE: "The Starfire Optical Range 3.5-m Adaptive Optical Telescope", PROCEEDINGS OF SPIE, vol. 4837, 2003, pages 934-943, XP002617666, DOI: 10.1117/12.457972**

**Description**

La présente invention concerne un procédé de réalisation d'un système de veille spatiale pour la surveillance de l'espace proche de la terre depuis le sol de façon à détecter les objets qui se trouvent dans cet espace, déterminer leurs trajectoires précises et surveiller ces trajectoires.

Un tel système permet de suivre l'évolution des trajectoires des objets et de cataloguer ces objets et leurs trajectoires.

L'espace proche de la terre est défini comme la part de l'espace situé jusqu'à quelques centaines de milliers de Km de la terre.

La détection concerne donc des objets qui sont essentiellement - mais pas uniquement - en orbite autour de la terre.

Le contexte de la présente invention est la hausse du nombre d'objets en orbite autour de la Terre que l'on constate.

On appellera ces objets débris dans la suite du texte sachant que cette notion de débris englobe les débris proprement dits, des satellites opérationnels ou même des météorites.

L'invention s'intéresse plus particulièrement aux débris en orbite basse (LEO pour Low Earth Orbit selon la terminologie Anglo-saxonne) de 200km à 2000km dont le nombre induit un risque croissant de collisions pouvant mener à long terme à un accroissement de la dégradation de la situation, mais surtout à des risques vis-à-vis des moyens spatiaux opérationnels, qu'ils soient militaires, scientifiques ou commerciaux.

Afin de maîtriser ces risques, il est primordial de cataloguer l'ensemble des débris potentiellement dangereux et de leur associer des paramètres orbitaux valides qui permettent de décrire leurs trajectoires.

Observés depuis un point fixe sur la Terre, les objets en orbite basse présentent comme caractéristiques de défiler rapidement sur la voute céleste. En outre, à chaque instant plusieurs objets traversent la voute céleste en plusieurs endroits.

Selon ses paramètres orbitaux chaque objet traverse la voute céleste locale à intervalles temporels plus ou moins réguliers, allant de quelques dizaines de minutes à plusieurs heures.

Des effets divers tels que marée, freinage atmosphérique, pression de radiation, irrégularité du champ gravitationnel terrestre affectent les orbites.

Ceci empêche de décrire ces orbites précisément à long terme avec un jeu invariant de paramètres orbitaux.

Par ailleurs, la distribution de taille des débris varie d'un rayon caractéristique de quelques millimètres, par exemple les résidus de propulsion, de peinture ou les météorites à plusieurs dizaines de mètres, notamment les satellites ou systèmes orbitaux artificiels, qu'ils soient opérationnels ou non.

Surveiller l'orbite basse nécessite de réaliser les fonctions suivantes :

- détecter les objets en orbite basse, sans connaissance a priori de leur existence, ni de leur position,
- définir leur trajectoire ou paramètres orbitaux, avec une précision adaptée à l'exploitation envisagée,
- mettre à jour au cours du temps de la connaissance de leurs paramètres orbitaux.

Il est en outre nécessaire de réacquérir les mêmes objets et de rafraîchir la mesure de leur paramètres orbitaux régulièrement afin que leur précision reste adaptée en fonction de l'exploitation qui doit en être faite, par exemple mettre en oeuvre les processus d'identification et de consolidation de risques de collision.

Enfin, le système doit être capable d'affiner sur demande la précision de la connaissance des paramètres orbitaux d'un objet donné, de sorte de pouvoir prédire précisément sa position dans un avenir proche, typiquement quelques jours, en vue par exemple de consolider un risque de collision et de planifier d'éventuelles manoeuvres d'évitement.

Les trois premières fonctions sont traditionnellement regroupées sous le thème de la veille spatiale (Survey en anglais), objet principal de la présente invention, alors que la quatrième relève du thème du suivi spatial (Tracking en anglais)

Réaliser ces fonctions de veille nécessite de disposer :

- d'un large champ de vue,
- d'une sensibilité permettant de détecter les objets d'intérêt,
- d'une précision de mesure de l'évolution des objets traversant ce champ de vue suffisante pour estimer leurs paramètres orbitaux avec le niveau de performance requis.

Les paramètres orbitaux s'estiment sur la base d'une série temporelle de mesures des vecteurs position/vitesses des objets acquise lors de leur transit dans le champ de vue.

Le brevet US 7 319 556 traite d'un télescope à large champ adapté à un système réalisant ces fonctions.

Les principales techniques actuellement envisagées et mises en oeuvre pour réaliser une surveillance de l'orbite basse reposent sur des radars basés au sol:
Le document Nicholas L. Johnson: "U.S. Space Surveillance", XP002617664, décrit l'utilisation d'une pluralité de radars et de dispositifs optiques autour du monde pour détecter, cataloguer et identifier des débris spatiaux.

- Radar de la « Space Fence » du DoD (Ministère de la Défense) américain;
- Radar GRAVES mis en oeuvre par le Ministère de la Défense française (radar à balayage de phase « phased array », bi-statique, à émission continue);
- Radar type d'alerte anti-missile (radar à balayage de phase « phased array », monostatique, à émission pulsée).

Bien qu'offrant de nombreux avantages (large champ de vue permettant d'intercepter des zones de 180° en azimut sur quelques dizaines de degrés en élévation, accès simplifié aux informations de vitesse grâce aux mesures Doppler, insensibilité à la météo et au cycle jours/nuit, etc...), les solutions radar pâtissent de nombreux inconvénients, résidant principalement dans leur coût de développement, d'opération et de maintenance, et dans leur bilan écologique :

- les fréquences utilisée sont élevées (bande L),
- il y a génération de pertes magnétiques importante,
- on a besoin de puissances de quelques dizaines de Mégawats, avec un faible rendement.
- la durée moyenne avant défaut (MTBF) des radars, comme tout matériel électrique de forte puissance est faible et occasionne des coûts de maintenance élevés.
- La population orbitale accessible par chaque radar est conditionnée par sa localisation sur le globe, ce qui conduit à les positionner en zone équatoriale, qui offre des conditions de température et d'humidité sévères pour les composants électriques et électronique augmentant d'autant le coût d'opération et de maintenance.

En alternative, les systèmes optiques ont déjà été considérés pour réaliser de la veille spatiale. Purement passifs, leur principe réside dans la détection de la lumière solaire réfléchie par les objets naturels ou artificiels en orbite autour de la Terre ou au-delà, astéroïdes et planétoïdes par exemple. De tels systèmes donnent accès à des séries temporelles de mesure des positions angulaires des objets par exemple en azimut et élévation.

Diverses méthodes sont appliquées pour mesurer ces positions, la plus intéressante s'appuyant sur la mesure à chaque instant de la position des objets détectés relativement aux étoiles présentes dans le champ de vue, étoiles dont la position est connue avec une très grande précision.

L'avantage majeur des systèmes optiques sur les systèmes radar réside dans leur faible coût tant en développement, en production, en opération et en maintenance, dans leur fiabilité et dans leur simplicité de mise en oeuvre.

Et, purement passifs, ils nécessitent peu d'infrastructure, énergie, bâtiments, moyens de transport.

Les systèmes optiques sont normalement utilisés pour surveiller la GEO (orbite géostationnaire) voire plus récemment pour la MEO (orbite intermédiaire entre LEO et GEO), car les objets sur ces orbites ont la particularité de défiler très peu sur la voute céleste : ce qui facilite les temps d'observation longs nécessaires à la détection d'objets petits et/ou de très faible intensité lumineuse.

Le GEODSS de l'US Air Force est un exemple opérationnel de tels systèmes. Il est composé principalement de télescopes métriques présentant un champ de vue faible de l'ordre du degré.

Pour ces applications GEO et MEO, on peut utiliser des temps d'intégration (de pose) longs, de 1 à quelques secondes, qui permettent d'augmenter le rapport signal sur bruit de façon à détecter de petits objets de quelques dizaines de cm de diamètre caractéristique.

Un exemple de réalisation multi-senseurs est décrit dans le document US 2009/0147238.

Quelques études ont également été initiées pour définir des solutions à même de surveiller la LEO.

Par exemple le système expérimental français SPOC (Système Probatoire pour l'Observation du Ciel) intégrait 4 petites lunettes d'ouverture de l'ordre de 10cm orientées sur les 4 coins cardinaux avec une élévation de quelques dizaines de degrés et offrant chacune un champ de vue de l'ordre de 10°.

D'autres concepts proposent des systèmes catadioptriques sensibles d'ouverture métrique ou plus dits de grand champ, de l'ordre de 5°, dédiés à la surveillance de la LEO comme par exemple le système objet du brevet US 7 319 556 précité.

Les solutions précitées et proposées actuellement ne permettent toutefois pas de résoudre les difficultés et contraintes fondamentales liées à la surveillance de la LEO à savoir

- nécessité d'une détection rapide (quelques jours) de tout nouvel objet, afin notamment d'identifier tout phénomène de fragmentation ou d'explosion en orbite,
- nécessité d'une ré-acquisition fréquente (tous les quelques jours) de chaque objet, et remise à jour de ses paramètres orbitaux afin de maintenir une précision de paramètres orbitaux exploitable, notamment vis-à-vis de l'évaluation opérationnelle de risques de collision,

- détectabilité des objets interdépendante de la situation géographique des système optique et orbites (inclinaison en particulier) des objets, liée à leur conditions d'éclairement,
- observation optiques liées aux conditions météorologiques locales (nébulosités)

Du fait de ces contraintes, la surveillance de la LEO nécessite également que des système optiques spécifiques ayant une très bonne sensibilité, avec une excellente résolution et un grand champ de vue.

En effet, les télescopes existant ont usuellement une grande sensibilité, avec de grandes ouvertures et/ou des temps d'intégration longs, et une haute résolution ce qui va au détriment d'un champ de vue large, puisque destinés à des applications classiques d'astronomie ou de veille des planètes mineures ou des astéroïdes : ils ne sont donc pas compatibles de la veille de la LEO.

Par ailleurs, le principe de la veille ne prévoit pas le suivi des objets. De ce fait lors de l'observation de la LEO, les durées d'intégration longues n'améliorent pas la détectabilité d'un objet, évalué par rapport au rapport signal sur bruit dans chaque pixel éclairé, Car en cas d'intégration classique (la seconde) l'objet traverse plusieurs pixel du senseur (capteur CCD) sur la durée d'intégration pénalisant non seulement la détermination de la position et sa datation, et intégrant du bruit et donc dégradant le rapports signal sur bruit une fois le pixel traversé.

D'un autre point de vue, les solution connues ne sont pas adaptées aux conditions de détection en LEO, et ne permettent donc pas d'assurer l'observation de l'ensemble d'objets observables avec un temps de revisite adapté.

Enfin, les télescopes à grand champ restent limités comme notamment connu du document US 2009/009897ou du document EP 1 772 761.

D'autres exemples de télescopes sont donnés dans les documents US 7 045 774, US 2007/0188610 et US 2009/0015914.

Au vu de cette situation, l'invention consiste à réaliser un système sol de veille de la LEO qui met en oeuvre des moyens optiques répartis à la surface de la Terre afin de détecter ces objets présent en orbite basse <2000km sans les connaître a priori et de fournir une première estimation de leurs paramètres orbitaux.

L'invention vise ainsi à définir un système sol de veille de la LEO basé sur des solutions optiques purement passives qui fournissent, pour un coût compétitif par rapport aux solutions radar (facteur 2 à 10), des performances comparables, c'est-à-dire :

- une couverture équivalente de la population d'objet en LEO, en terme de complétude, de durée maximale de détection d'un nouvel objet et de durée maximale de revisite du système pour chaque objet catalogué, soit typiquement une durée de revisite permettant de détecter 95% des objets de plus de 10 cm.
- une précision équivalente en termes d'orbite restituée et maintenue, de l'ordre de 100 m et 2 m/s.

L'invention concerne ainsi le suivi LEO par technologie optique et des solutions de mise en oeuvre de ce suivi.

Pour ce faire, l'invention prévoit un procédé de réalisation d'un système de veille spatiale dans des zones LEO de l'orbite terrestre comportant une étape de disposition et de mise en réseau de stations de systèmes optiques de veille sur la surface du globe selon un maillage adapté pour offrir un cycle efficace journalier du système de 24h et une durée de revisite choisie de la zone LEO observée, ou on définit pour ledit maillage un positionnement en latitude des systèmes optiques selon des latitudes privilégiées à partir des types d'orbite à surveiller, et on prévoit:

- des sites de latitudes élevées >50° Nord ou Sud,
- des sites des latitudes moyennes entre 30° et 50° Nord ou Sud,
- des sites de latitudes inférieures à 30° proches des tropiques et subtropicales,
- une sélection de sites offrant un espacement en longitude autour de 20° ou moins.

Selon l'invention, on réalise la disposition et la mise en réseau des systèmes optiques de veille sur la surface du Globe selon les étapes suivantes:

- on définit un positionnement en longitude des systèmes optiques à partir d'un calcul au moyen d'un ordinateur des durées de revisite de chaque point du globe,
- on optimise la disposition des systèmes optiques selon une analyse par calculateur des conditions statistiques météo au niveau des intersections desdites latitudes et longitudes pour obtenir une durée maximale de revisite du système au plus égale à une semaine,
- on dispose les systèmes optiques aux noeuds du maillage constitué selon lesdits positionnements en latitude et en longitude selon un pas adapté à respecter ladite durée maximale de revisite.

Préférablement, la durée maximale de revisite est au plus égale à une semaine et de préférence de 2 jours à 90%.

Le procédé comporte avantageusement une étape de définition de conditions d'observation spécifiques pour chaque système optique de veille en fonction de sa situation géographique adaptées à assurer à chaque système optique un éclairement optimal des objets à détecter.

Préférablement on utilise des systèmes optiques à grand champ supérieur ou égal à 5°x5°, de préférence supérieur ou égal à 10°x10°.

Le procédé est avantageusement tel qu'on procède à une optimisation des conditions de scrutation des zones du ciel par les systèmes optiques de veille par un pilotage desdits systèmes adapté à leur faire parcourir les zones du ciel 4 à 6 fois plus vite que la vitesse de transit des objets à détecter.

Selon un mode de réalisation avantageux, on configure les systèmes optiques de veille implantés aux noeuds du maillage pour scruter des zones de ciel de quelques 10 à 40° en azimut au dessus de 35° et d'élévation de 10° à 60° autour d'azimuts variant selon l'heure, la saison et la latitude, correspondant à des conditions d'éclairement fixes.

Préférablement on configure les systèmes optiques de veille implantés aux noeuds du maillage pour scruter des zones de ciel de 20 à 40° en azimut au dessus de 35° et d'élévation de 20 à 60° autour d'azimuts variant selon l'heure, la saison et la latitude.

Avantageusement on configure les systèmes optiques de veille implantés aux noeuds du maillage de façon à parcourir les zones de ciel scrutées avec une fréquence supérieure à 4 fois la durée minimale de transit des objets de la population visée dans lesdites zones de ciel scrutées.

Selon un mode de réalisation préférentiel, on dispose les systèmes optiques de veille au niveau de stations implantées sur:

des sites en Europe continentale, Sud de l'Espagne, en Asie Centrale, sites des observatoires astronomiques existant, au Japon et au sud Canada en sorte de se focaliser sur la plupart des objets d'inclinaison supérieur à 40° tout en détectant les objets sur orbite polaire non SSO;

des sites dans le Pacifique, Tahiti, Iles Marquises, au Chili, sites de l'ESO, en Afrique de l'Est, Malindi, à Diego Garcia dans l'Océan Indien et sur la côte nord Australienne en sorte de couvrir les orbites équatoriales;

des sites situés à des latitudes supérieures à 50° nord ou sud, Alaska, station de tracking de Poker-Flat, nord du Canada, Island, Kiruna, Iles Kerguelen et Sud de l'Argentine en sorte de détecter plus particulièrement les objets sur orbite polaires et SSO.

Selon une variante de l'invention, on équipe chaque station d'un système optique de veille et d'un télescope de suivi.

Le procédé de l'invention est avantageusement tel que l'on définit pour chaque système optique des conditions d'observation spécifiques en azimut et élévation en fonction de leur situation géographique en sorte d'assurer à chaque système optique un éclairement optimal des objets à détecter.

Avantageusement selon le procédé on optimise le maillage de telle sorte que ses noeuds se trouvent sur des terres émergées.

Préférablement, on optimise le maillage de telle sorte que ses noeuds coïncident avec des lieux comportant une infrastructure préexistante et/ou des stations d'observation spatiale et des sources d'énergie.

D'autres caractéristiques et avantages seront apparents à la lecture de la description qui suit d'un exemple de réalisation non limitatif de l'invention en référence aux dessins qui représentent:

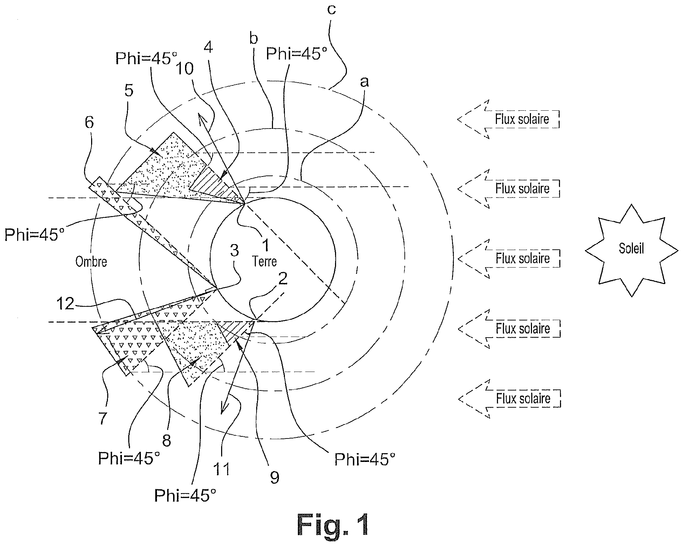

en figure 1: un exemple d'implantation de systèmes optiques en fonction de la latitude;

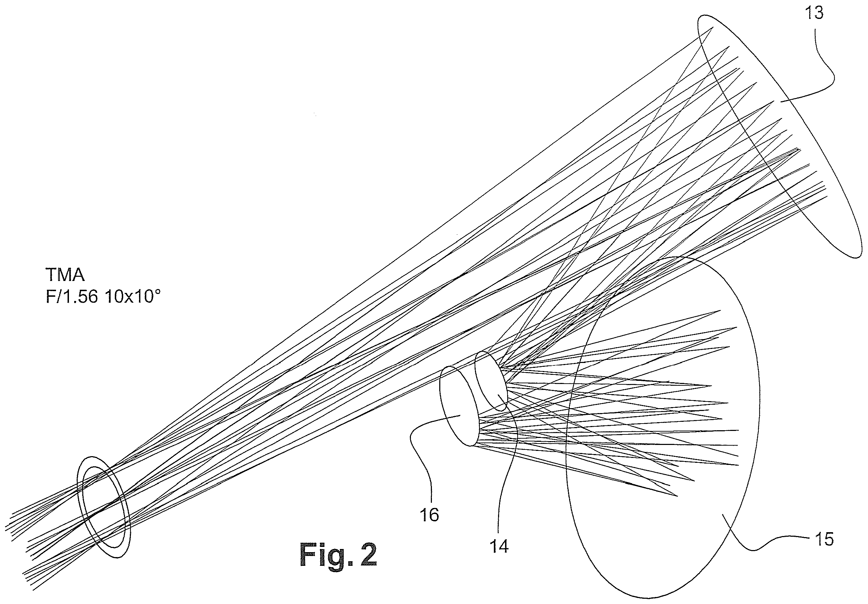

en figure 2: un schéma de principe d'un télescope adapté à l'invention;

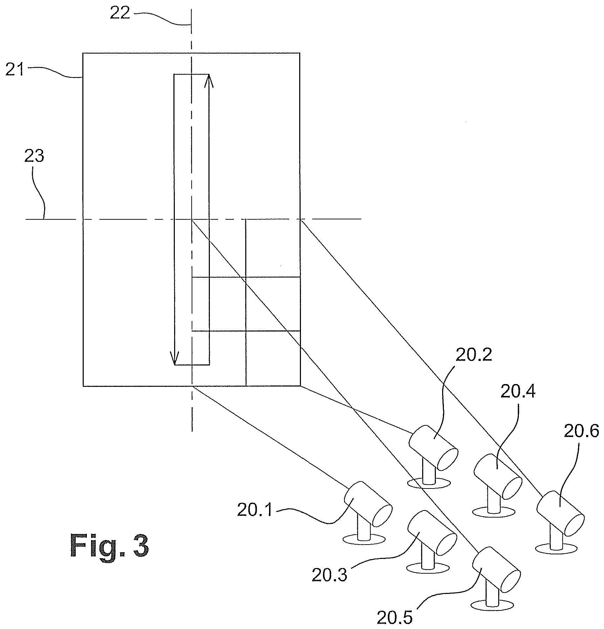

en figure 3: une représentation schématique d'un système optique de l'invention et la zone de ciel balayée par ce système.

Dans le cadre de l'invention, pour réaliser le maillage on définit, en utilisant un moyen informatique de simulation des performances et des positions de systèmes optiques, une configuration du système consistant en une mise en réseau adaptée de systèmes optiques sol, selon ledit maillage ou une approximation dudit maillage sur la surface du Globe ou surface de la planète, pour offrir un cycle efficace journalier du système proche de 24h. c'est-à-dire une couverture de l'environnement complet de la planète en continu.

On définit par calcul d'angle de phase (l'angle de phase est en astronomie l'angle entre le soleil, l'objet observé et l'observateur, ou plus généralement l'angle entre le rayon lumineux incident et le rayon réfléchi.) et de position du soleil et par simulation des conditions (zone à couvrir, moment de la journée, etc...) d'observation spécifiques pour chaque système optique en fonction de sa situation géographique, pour assurer à chaque système optique un éclairement optimal des objets à détecter.

On utilise pour les systèmes optiques des détecteurs passifs à grand champ, supérieur à 5° ou préférablement supérieur à 10° et adaptés à détecter les objets de la zone scrutés.

Par exemple on choisit des télescopes à miroir de 70cm aptes à détecter des objets de 10cm à une distance de 1000 Km.

On optimise ensuite les conditions de scrutation des zones du ciel par les systèmes optiques, de façon à parcourir la zone d'observation 4 à 6 fois plus vite que la vitesse de transit des objets à détecter.

En exemple de réalisation, le maillage est réalisé par simulation selon l'une ou l'autre des méthodes ci dessous ou selon une combinaison de ces méthodes.

Les étapes communes aux deux méthodes sont

- Une présélection d'un ensemble de sites candidats, sélectionnés parmi des sites accessibles (présence d'infrastructure type accès, électricité, communication, et qualité de ciel favorable pour observation optique) et sur base d'une analyse de la problématique de visibilité :

    objets en orbite fortement inclinée ([-80° ; 120°]) mieux visibles depuis les latitudes élevées (>50° N ou S),
    objets en orbite moyennement inclinée (autour de 50°) mieux visibles depuis des latitudes moyennes (~45°),
    objets en orbite faiblement inclinée (<~30°) mieux visibles depuis des latitudes proches des tropiques et subtropicales,

- une sélection de sites offrant le plus possible un espacement en longitude autour de 20° ou moins par calcul du décalage moyen en longitude de la trace au sol des orbites basses sur deux orbites successives (environ 20°, qui correspond à la vitesse de rotation de la Terre de 15° par heure - et la période de l'orbite à 500km, environ 90min).
- une utilisation d'un simulateur informatique au minimum capable de simuler la stratégie d'observation des stations, les conditions d'éclairement à satisfaire pour que les objets orbitaux soient détectables, et l'évolution au cours du temps de la population orbitale de référence autour de la Terre (par exemple, de manière non exclusive, le catalogue TLE du NORAD) en tenant compte au moins de l'interaction Terre/Soleil. On définit au moins pour chaque objet de la population simulée la liste des épisodes de visibilité au cours du temps, c'est à dire les. conditions où l'objet est visible depuis un site, selon la stratégie d'observation simulée, sous forme de : date de début de visibilité, durée de visibilité, identification du site en visibilité, évaluant pour l'ensemble des épisodes de visibilité s'ils vérifient les conditions de détection (durée de visibilité minimale nécessaire pour effectuer une première détermination de trajectoire, fonction de l'orbite de l'objet).

Partant de ces étapes communes, la méthode n°1 comporte:

- une simulation des épisodes de visibilité sur l'ensemble de la population de référence, pour l'ensemble des sites prédéfinis, sur une durée de simulation permettant de gommer les effets jour/nuit et saisonniers (typiquement plusieurs jours à plusieurs semaine en été et en hiver),
- une recherche sur la base des résultats du sous-ensemble minimum de stations garantissant que la portion d'objets visée (par exemple 98% de la population de référence) pourra être cataloguée en une durée minimale objectif (par exemple 1 mois).

Pour qu'ils puissent être catalogués, les objets doivent être vus au moins une fois en satisfaisant aux conditions de détection dans le délai imparti et la recherche de minimum pourra se faire par utilisation d'un algorithme de recherche de minimum classique.

La méthode n°2 comporte une simulation des épisodes de visibilité sur l'ensemble de la population de référence pour un sous ensemble préféré de sites sélectionné (par exemple selon des critères de facilité d'accès, de qualités particulières du site...) et une évaluation du taux de couverture, c'est-à-dire le pourcentage de la population de référence visible au moins une fois en satisfaisant aux conditions de détection, ainsi que la durée de convergence c'est à dire la durée de temps simulé nécessaire pour atteindre ce taux de couverture.

Cette simulation est complétée par itération, en modifiant le sous-ensemble de sites préférés par ajout ou suppression de sites, jusqu'à obtenir les performances visées, par exemple un taux de couverture de 98% de la population de référence, et une durée de convergence, par exemple de 1 mois.

Pour la détection des objets, l'invention prévoit une mesure des séries temporelles de position des objets traversant les zones scrutées par intégration courte sur champ fixe, avec restitution par rapport aux étoiles dans le champ de vue avec un minimum de 3 points de mesure pour chaque objet traversant la zone scrutée.

L'utilisation de temps d'intégration court est l'un des éléments novateurs de l'invention.

En mode veille, on ne peut suivre les objets, puisqu'on ne connait pas leur présence a priori. On effectue donc des prises de vues sur une position de pointage fixe pendant le temps de pose (ou durée d'intégration).

Dès lors la sensibilité (capacité à voir une étoile ou un objet orbital par rapport au bruit de fond) est définie par le rapport signal à bruit dans chaque pixel, défini par la formule simplifiée :

$$SNR \cong \frac{Signal}{\sqrt{\sum Bruits^{2}}}$$

Avec :

$$Signal = FluxPhotons \times TempsPose$$

$$\sum Bruits^{2} = BruitPhoton^{2} + BruitFondCiel^{2} + \sum BruitsElectroniques^{2}$$

$$BruitPhoton = \sqrt{Signal}$$

$$BruitFondCiel = FluxPhotonFondCiel \times TempsPose \, .$$

L'observation des astres lointains se fait en général en compensant la rotation terrestre afin de conserver un ciel fixe dans le champ de vue.

L'astre d'intérêt éclaire alors un ensemble de pixels fixes. Dans ces conditions, afin d'augmenter le SNR (rapport signal sur bruit), il suffit d'augmenter le temps de pose afin que, pour un objet ayant une brillance donnée, le signal domine sur les autres bruits, notamment le bruit de fond de ciel.

Pour la surveillance optique de l'orbite GEO, on est dans la même situation : les objets y sont quasiment fixes par rapport à l'axe de visée au sol, et Ici également, on fixe l'axe de visée par rapport au référentiel local et l'augmentation de la sensibilité est obtenue en augmentant le temps de pose

Ceci explique que traditionnellement ce sont des temps de pose longs (ou temps d'intégration) qui sont utilisés, de l'ordre le plusieurs secondes à plusieurs minutes.

Dans le cadre de la veille de l'orbite basse, l'objet n'est pas fixe par rapport à l'axe de visée. Son image défile donc sur le CCD. Chaque pixel du CCD n'est éclairé par le signal que pendant la durée de traversée de ce pixel par l'image de l'objet. Par contre chaque pixel du CCD est éclairé par le bruit de fond sur la totalité du temps de pose.

Ainsi, selon la présente invention, afin de maximiser le SNR, on fixe un temps de pose proche de la durée de transit de l'objet dans le champ du pixel. Or en LEO, selon l'axe de visée (vitesse angulaire apparente plus basse à basse élévation qu'au zénith), la configuration de l'instrument (champ de vue, taille de chaque pixel), et l'orbite de l'objet (vitesse angulaire plus petite à haute altitude) ce temps de transit est de l'ordre de quelques millisecondes à quelques centaines de millisecondes.

On choisit donc des temps de pose (ou d'intégration) de l'ordre de quelques millisecondes à quelques centaines de millisecondes qui permettent d'obtenir le niveau de signal sur bruit maximal possible.

Le temps de pose idéal est sélectionné par calcul du bilan de liaison photométrique en prenant en considération les orbites favorisées, différentes configuration d'observation (élévation, angle de phase, temps de pose), la qualité du fond de ciel, l'effet de l'atmosphère (atténuation du signal et dilution par turbulence), la configuration instrumentale (télescope et plan focal) et les caractéristiques des objets visés (taille minimale et albédo minimal).

Ceci revient à réaliser une analyse de sensibilité aux différents paramètres permettant de définir la configuration d'observation et la configuration instrumentale la mieux adaptée.

Comme la brillance d'un objet est directement liée à sa taille et à sa capacité à réfléchir la lumière du soleil (albédo), la grande sensibilité du système permet de voir des objets de petites tailles.

Les images prises lors du transit des objets sont traitées en tenant compte du positionnement du système optique au moyen d'un système informatique de traitement des images pour en extraire les positions datées des objets traversant le champ.

En complément, en adjoignant à chaque système optique de veille un système de suivi dédié, réalisé par exemple à l'aide d'un télescope a champ classique motorisé et piloté par un système informatique de suivi relié au système informatique du système optique de veille, on acquière, sur la base de la désignation réalisée par le système de veille, des mesures de position plus nombreuses et précises permettant d'obtenir la précision requise sur la détermination des paramètres orbitaux des objets.

Ceci permet de transformer le système de veille en système de suivi c'est à dire un système apte à définir et suivre une trajectoire précise de objets auparavant détectés

On réalise la mise en réseau des systèmes optiques de veille sol sur la surface du Globe ou de la planète en respectant les règles suivantes:

- on définit des latitudes privilégiées pour les systèmes optiques à partir des types d'orbite et notamment on prévoit:

  - des systèmes optiques proche de la bande intertropicale adaptés à surveiller les orbites équatoriales inférieures à environ 30°;
  - des systèmes optiques dédiés aux orbites fortement inclinées et polaires supérieures à environ 60% sur des latitudes aux alentours de 50° et plus;
  - des systèmes optiques sur des latitudes aux alentours de 40° pour accéder aux orbites d'inclinaison intermédiaire;

- on définit le maillage en longitude à partir de l'étude des durées de revisite de chaque point du globe,
- on prend en compte les conditions statistiques météo pour obtenir une durée maximale de revisite du système au moins égale à 2 jour à 95%.

Les conditions de mise en oeuvre locale de l'observation sont telles que chaque système optique implanté à chaque noeud du maillage ne scrute que des zones de ciel de quelques 10° à 40°, de préférence 20° à 40°, en azimut au dessus de 35° et d'élévation de 10° à 60°, de préférence 20° à 60°, autour d' azimuts variant selon l'heure, la saison et la latitude ce qui correspond à une bande d'ascension droite fixe, en fonction des performances recherchées c'est à dire la population d'objets LEO à couvrir, le taux de couverture objectif et la précision du catalogue à maintenir.

Pour ce faire, les systèmes optiques de veille de base comprennent un dispositif de capture d'images motorisé et piloté par un système informatisé de pointage et d'acquisition d'images.

Les système optiques de veille de base du réseau et leurs moyens de commande sont conçus de façon à parcourir la zone à observer avec une fréquence supérieure à 4 fois la durée minimale de transit des objets de la population visée dans la zone de ciel scrutée.

Une version pour laquelle les systèmes optiques comportent un télescope de champ de 5°x5° que l'on fait balayer une zone d'espace est en outre envisageable dans le cadre de l'invention.

Pour déterminer les orbites des objets, on réalise une première détection des objets en LEO par une mesure des séries temporelles de position des objets traversant les zones scrutées.

Pour ce faire on procède par intégration courte sur champ fixe comme discuté plus haut avec un minimum de 3 points de mesure pour chaque objet traversant la zone scrutée, et on effectue une détermination des positions de l'objet par rapport aux étoiles dans le champ de vue, ces étoiles étant référencées au niveau du système informatisé de pointage local ou un système informatique additionnel éventuellement déporté au centre de commande de l'ensemble des système de suivi du réseau et comportant une cartographie du ciel.

Les orbites sont ensuite éventuellement précisément déterminées par l'utilisation d'un système de suivi dédié tel que décrit plus haut qui utilise comme données d'entrée les désignations du système optique de base décrit précédemment.

Dans ce cadre, on utilise un algorithme inspiré des « senseurs stellaires » (startracker en anglais), permettant de déterminer dans chaque image prise par le télescope la position de l'objet orbital soit en ascension droite et en déclinaison, soit en azimut et élévation par mesure relative de sa position dans l'image par rapport à la position des étoiles, connue de manière absolue de façon très précise dans le système qui intègre un catalogue (tel que le catalogue Hiparcos par exemple).

Le principe général du traitement de l'image réalisé par un logiciel de traitement d'image est le suivant:

- repérage des étoiles dans chaque image par analyse de motifs connus, à partir de la connaissance de l'axe de visée grossier,
- repérage des éléments brillants qui ne sont pas des étoiles,
- pistage des éléments brillants qui ne sont pas des étoiles dans deux images successives afin de discriminer les objets orbitaux du bruit dans l'image,
- détermination pour chaque image des coordonnées des objets orbitaux identifiés par mesure de leur position (pixel central) par rapport à la position des étoiles.

Pour cette détermination, on utilise 5 étoiles connues bien que théoriquement 3 étoiles suffisent ; mais on améliore ainsi la précision et la fiabilité des calculs.

Enfin, la position mesurée est datée de la date de prise de vue.

Pour le positionnement des systèmes optique, il y a lieu de définir le maillage et les noeuds où se trouveront les systèmes optiques.

L'analyse des conditions de visibilité des objets en LEO depuis le sol définit des latitudes privilégiés selon le type d'orbite.

Celles-ci le sont typiquement pour une bande en ascension droite, évoluant de 1° par jour pour compenser la révolution de la Terre autour du soleil, centrée sur une ascension droite fournissant l'angle de phase d'éclairement le plus faible possible, dépendant de l'altitude des objets.

Dans le cadre du positionnement en latitude des systèmes optiques, on prend en compte notamment le fait que:

- les orbites équatoriales inférieures à environ 30° d'inclinaison ne sont accessibles que par des systèmes optiques proche de la bande intertropicale;
- les orbites fortement inclinées et polaires supérieures à environ 60% ne sont accessibles que depuis des latitudes aux alentours de 60° et plus;
- les orbites d'inclinaison intermédiaire sont accessible depuis des latitudes aux alentour de 45°.

Pour ce qui concerne la visibilité des objets en longitude, l'invention consiste aussi à surveiller les zones du ciel où l'on aura la plus forte probabilité de détecter des objets.

Ces zones remplissent alors aux critères suivants :

- l'élévation est supérieure à 30°, afin de limiter l'absorption par l'atmosphère des rayons lumineux
- la surveillance est faite de nuit pour le télescope, mais pour des objets éclaires par le soleil, de façon à maximiser le rapport signal sur bruit
- l'angle de phase des objets à détecter est chois inférieur à 45°.

Ces critères permettent de définir une direction moyenne autour de laquelle les objets sur une famille d'orbite ont un angle de phase inférieur à 45°. L'angle de phase dépendant de la position du soleil par rapport à la Terre, de l'objet dans le ciel local et de l'heure locale, cette direction évolue avec la rotation de la Terre, donc avec l'heure locale.

A noter également que la vitesse angulaire apparente des satellites en LEO étant plus faible à basse élévation qu'au zénith, à temps de pose donné, la sensibilité est plus faible au zénith (hors effet de l'atmosphère).

La figure 1 illustre les zones d'observation que l'on définit ainsi ; elle représente une coupe de la terre en latitude (selon un parallèle) pour laquelle trois sites 1, 2, 3 distants en longitude et trois orbites a, b, c ont été représentés.

Les zones de visibilité sont dans ce cas par rapport au flux solaire la zone 4 pour le site 1 et l'orbite a, la zone 5 pour le site 1 et l'orbite b, les zones 6 et 7 pour le site 3, ces zones étant séparées par la zone d'ombre de la terre, les zones 6 et 7 recouvrant les orbites a, b et c, les zones 8 et 9 pour le site 2, la zone 8 permettant de détecter les objets sur l'orbite b, la zone 9 les objets sur l'orbite a.

On voit que pour les sites 1 et 2 les zones de visibilité sont décalées par rapport aux zénith locaux 10 et 11 alors que pour le site 3, le zénith local 12 est dans la zone de visibilité 7.

L'analyse des durées de revisite de chaque point du globe, prenant en compte ces conditions de visibilité pour l'ensemble de la population LEO à détecter, démontre qu'un maillage en longitude fournit à chaque instant une bande en longitude où les conditions de visibilité sont remplies

Ces deux analyses en longitude et en latitude permettent de définir un maillage du globe fournissant un cycle efficace journalier du système proche de 24h, pour chaque type d'orbite, offrant la couverture et la durée de revisite requise.

La prise en compte des statistiques météo saisonnières permet de définir un taux de redondance nécessaire: l'analyse des configurations météorologiques fait apparaître une forte dé-corrélation des conditions de couverture nuageuse locale pour des points séparés de quelques centaines de km sur le globe.

Ainsi, l'addition au maillage de noeuds en longitude fournit un taux de redondance sur couverture permettant de s'abstraire globalement des conditions météorologiques locales.

Ceci conduit au cas concret ci-dessous de mise en place d'un réseau qui comprend 15 sites répartis à différentes latitudes:

Des sites en Europe continentale (Sud de l'Espagne), en Asie Centrale (sur les sites des observatoires astronomiques existant), au Japon et au Canada (partie sud) permettent de se focaliser sur la plupart des objets d'inclinaison supérieur à 45°, tout en détectant les objets sur orbite polaire non SSO.

Des sites dans le Pacifique (Tahiti, Iles Marquises), au Chili (sites de l'ESO), en Afrique de l'Est (Malindi), à Diego Garcia dans l'Océan Indien et sur la côte nord Australienne permettent de couvrir les orbites équatoriales, ainsi que l'ensemble des autres orbites (bien qu'offrant pour celles-ci des périodes d'observation plus courtes qu'aux latitudes plus élevées).

Finalement, des sites situés à des latitudes supérieures à 60° (nord ou sud) permettent de détecter plus particulièrement les objets sur orbite polaires et SSO : Alaska (station de tracking de Poker-Flat, contribuant au réseau de tracking de l'ESA), Nord du Canada, Island, Kiruna, Iles Kerguelen et Sud de l'Argentine.

Le choix de sites dans l'hémisphère nord et l'hémisphère sud permet de gommer en partie l'effet de saison qui limite les possibilités d'observations.

Dans le cadre de la réalisation d'un système de veille et de suivi, chaque station est équipée d'un système optique de veille et d'un télescope de suivi.

Au niveau des stations de veille, pour chaque système optique, on scrute des zones prédéfinies du ciel local en fonction de l'heure de la nuit et du jour, correspondant à une bande d'ascension droite fixe évoluant de 1° par jour fournissant les conditions d'éclairement optimales (angle de phase type <45°) selon la latitude. En effet, pour les objets en LEO les périodes de visibilités sont restreintes à quelques heures suivant le crépuscule et précédant l'aube (durée variant selon la saison, la latitude, l'inclinaison et l'altitude des objets), correspondant a des bandes d'ascension droite fournissant les conditions d'observation optimales (angle de phase d'éclairement minimisé), sans que l'objet ne soit dans l'ombre de la Terre.

Il s'agit de bandes de 10 à 60° de largeur en azimut, azimut moyen, la largeur de bande variant suivant la latitude, la date, l'heure et l'altitude de l'orbite, qui sont situées à l'est et à l'ouest,

En outre, la majeure partie des objets satisfaisant aux conditions de visibilité traverse cette bande azimutale dans une bande de 10 à 60° de hauteur en élévation, au dessus de 35° d'élévation.

Une vue schématique des zone couvertes en fonction de la longitude est donnée en figure 1.

En prenant en compte une élévation minimale >30° pour limiter l'absorption de l'atmosphère et une élévation maximale pour limiter la vitesse de défilement apparente, on définit une zone du ciel à surveiller préférentiellement, ainsi que son évolution en fonction de l'heure du jour et des saisons et pour différentes latitudes.

Comme à chaque altitude d'orbite correspond une zone de visibilité plus ou moins large à une heure donnée, et que chaque altitude d'orbite comporte des populations disparates (en inclinaison, noeud ascendant, etc.), il est difficile de déterminer théoriquement la zone de ciel idéal à surveiller. Afin de limiter celle-ci on détermine par simulation, en fonction de l'heure et de la saison, une zone en azimut où la densité d'objets satisfaisants aux conditions de visibilité sont respectées. Le principe de simulation est simple : pour un certain nombre de latitudes (par exemple 0°, 30°N, 30°S, 45°N, 45°S, 60°N, 60°S) les conditions d'éclairement (angle de phase) de chaque objet d'un catalogue de référence sont simulées sur plusieurs jours consécutifs et sur les deux saisons, en intégrant les mouvements relatifs des objets et du couple Terre/Soleil. On en mesure, en fonction de l'heure, la zone du ciel local (en azimut et élévation) comportant la plus forte densité d'objets respectant les conditions requises d'éclairement.

On affine la zone idéale par itérations vis a vis de la densité de maillage que l'on souhaite obtenir.

Pour cela on effectue une première définition de zone de ciel à surveiller pour différentes latitudes et on la modélise dans le simulateur utilisé pour définir le maillage.

On mesure la performance accessible par un réseau donné et si la performance obtenue est insuffisante ou si la configuration du réseau de stations devient trop importante on réévalue la zone de ciel à surveiller pour chaque latitude par une nouvelle analyse.

Ceci est répété par itérations jusqu'à obtenir un compromis satisfaisant en terme de performance et de coût.

Pour scruter le ciel dans le cadre de la présente invention les systèmes optiques classiques n'offrent pas un champ de vue suffisant.

Le principe retenu dans la présente invention est d'avoir un grand champ pouvant atteindre 60° par 40°.

La combinaison de champ par adjonction de systèmes optiques classiques nécessite un nombre de systèmes optiques rédhibitoire.

De même le balayage de la zone de ciel par un ensemble de systèmes optique à champ classique pose des problèmes complexes notamment de synchronisation des systèmes et de mouvements parasites de ces systèmes les uns par rapport aux autres.

Le principe de l'invention est de mettre oeuvre au niveau de chaque système optique des télescopes à champ moyen et haute sensibilité sur lesquels sont positionnés un capteur, ces télescopes étant asservis ensemble et regroupés de manière à fonctionner simultanément pour offrir un champ large.

Les télescopes des systèmes optiques sont dimensionnés pour l'observation de petits débris dans la couche LEO, par exemple débris de l'ordre de 8 à 10 cm à 600 Km d'altitude et sont ainsi parfaitement adaptés à observer des objets à des altitudes supérieures bandes MEO ou GEO avec une magnitude équivalente.

Par contre la vélocité de la monture nécessaire pour la couche LEO est plus importante.

La détermination des paramètres des télescopes conduisent à un diamètre de l'ordre de 80 cm à 100 cm, une longueur focale de l'ordre de 1,5 m à 2 m, ce paramètre n'étant pas critique, un champ idéalement compris entre 5° et 20 ° et plus précisément de 5° à environ 10°, la valeur préférée étant un champ de l'ordre de 10°, 8° à 12° notamment.

Dans l'exemple pour lequel le champ du télescope est de l'ordre de 10°, pour l'acquisition des images, on utilise une caméra de type à capteur CCD dans le plan focal de l'ordre de 4000x4000 pixels conditionnée par la combinaison de la longueur focale et du champ. Pour un télescope de champ de 5°, le capteur CCD serait de 2000x2000 pixels.

En résumé, le capteur du ou des télescopes est un capteur CCD allant de 1000x1000 jusqu'à 6000x6000 pixels avec un temps de lecture CCD inférieur ou égal à 2 secondes et en ce que le temps de pose inférieur à 100 millisecondes.

Le domaine spectral est la lumière visible et les objets à surveiller vont de la couche LEO à la couche GEO avec une magnitude inférieure allant jusqu'à 13.

Les détecteurs peuvent être de type CCD, CMOS, SCMOS ou EMCCD mais le capteur préféré pour son bon rapport signal sur bruit reste le capteur CCD illuminé par l'arrière et refroidi.

On choisira un télescope de type TMA ou de type Schmidt et le type de télescope préféré est un télescope anastigmatique à trois miroirs (TMA). Un tel télescope est schématisé en figure 2 avec un miroir primaire 13 convergent, un deuxième miroir 14 divergent, un troisième miroir 15 et un détecteur 16.

En exemple de réalisation, la taille choisie est de l'ordre de 80cm de diamètre du miroir primaire qui permet d'atteindre des objets d'environ 10cm en LEO pour des objets distants de 500km et des objets de l'ordre de 20cm à une distance de 2000km pour un objet très sombre, le cas dimensionnant étant un albédo de 0,1.

Dans l'absolu, c'est le calcul de bilan de transmission qui permet d'optimiser la taille du télescope unitaire, ainsi que l'ensemble de la configuration optique et opérationnelle pour une taille d'objet minimale détectable voulu en fonction de l'altitude.

Les télescopes sont avantageusement définis en sorte d'offrir un champ utile de 10° par 10° et on prévoit de regrouper et d'asservir 6 télescopes pour réaliser un système de veille de base.

Ceci donne un champ recomposé de 30° en élévation par 20° en azimut.

Pour des télescopes de 5x5 le champ recomposé est réduit et le balayage peut être plus grand.

On monte chaque télescope sur une monture rotative programmable pour balayer une zone globale allant jusqu'à 60° en élévation par 40° en azimut.

La figure 3 représente les télescopes 20-1 à 20-6 d'un système de base en face de la zone de ciel balayée 21 en élévation 22 et en azimut 23.

La vitesse de déplacement des télescopes est telle que chaque objet traversant la zone balayée est détecté trois fois en sorte d'obtenir au minimum 3 mesures de position datées, idéalement réparties sur l'arc de transit de l'objet dans la zone de ciel pour en prédéterminer l'orbite.

Les images sont traitées avec des algorithmes de traitement d'image du type suiveurs d'étoiles qui permettent de déterminer la position des objets mobiles dans le champ par rapport aux étoiles de fond avec une précision angulaire de l'ordre de l'IFOV (instantaneous Field Of View, soit champ de vue instantané) : soit 5,85 secondes d'arc.

Les durées de transit dans la zone ainsi définie sont de l'ordre de quelques minutes, selon la population orbitale à couvrir, la durée étant d'autant plus courte que l'orbite est basse.

Le nombre de prises de vues nécessaire pour parcourir la zone concernée est directement liée au champ de vue du système optique large champ employé.

La durée de prise de vue, et en particulier le temps d'intégration, combinée aux performances de repositionnement du système optique (et en particulier sa vitesse de déplacement et sa durée de stabilisation) et au nombre de prise de vues conditionne la durée minimale de parcours de la zone de ciel local à scruter.

Un compromis doit donc être réalisé entre ce nombre de prises de vue, la durée maximale de parcours de la zone de ciel à scruter, les caractéristiques des montures du système optique, leur vitesse de relocalisation stabilisation incluse et le temps d'intégration.

Afin de garantir un échantillonnage de la zone du ciel à scruter limitant les pertes, le système optique balaye cette zone au minimum 4 à 6 fois plus vite que la plus petite durée de transit des objets visés.

Cette contrainte s'ajoute à la contrainte de temps d'intégration optimum pour dimensionner les systèmes optiques en terme de champ de vue et performance de déplacement.

Les montures équatoriales utilisées permettent un déplacement en azimut d'un champ au champ consécutif en moins d'une seconde, stabilisation comprise.

Les télescopes du système optique balayent le ciel sur une bande de 10 à 60° en élévation et 10 à 40° en azimut, autour de 45° d'élévation, centré sur une ascension droite proche de l'opposée du soleil (dépendant de la latitude).

La bande balayée est parcourue par des aller et retours successifs. Ses coordonnées tropocentriques évoluent avec le déplacement du soleil au cours d'une même nuit (typiquement 15 arcmin par minute, vers l'ouest) et d'une nuit à l'autres pour compenser la révolution de la Terre autour du soleil (1° par jour).

Les objets situés à une altitude de 500km, observés à 45° d'élévation traversent la zone scannée en plus de 15s.

Selon cette configuration, le système permet de garantir que la position de chaque objet à une altitude supérieure à 500 Km sera mesurée 3 fois durant son transit.

La détection d'objets en orbite LEO n'est pas compatible avec un suivi des objets car on ne les connait pas a priori et on connait encore moins leur trajectoire.

Aussi les systèmes optiques de veille sont maintenus fixes durant chaque intégration, observant une zone de ciel particulière correspondant leur champ de vue.

La meilleure précision de mesure de position datée s'obtient en évaluant la position de chaque objet en LEO dans le champ de vue par rapport aux étoiles également dans le champ de vue.

Comme vu plus haut on peut compléter le système de veille par un système de suivi dont l'objectif est d'acquérir, sur la base de la désignation réalisé par le système de veille, des mesures de position plus nombreuses et précises afin d'atteindre la précision requise sur la détermination des paramètres orbitaux.

Le système de suivi est basé sur des télescopes classiques, de haute sensibilité et de champ de vue standard de l'ordre de 1°.

Ces télescopes sont positionnés sur les mêmes sites que les systèmes optiques de veille.

## Revendications

1. Procédé de réalisation d'un système de veille spatiale dans des zones LEO de l'orbite terrestre comportant une étape de disposition et de mise en réseau de stations de systèmes optiques de veille sur la surface du globe selon un maillage adapté pour offrir un cycle efficace journalier du système de 24h et une durée de revisite choisie de la zone LEO observée, où on définit pour ledit maillage un positionnement en latitude des systèmes optiques selon des latitudes privilégiées à partir des types d'orbite à surveiller, et on prévoit:

   - des sites de latitudes élevées >50° Nord ou Sud,
   - des sites des latitudes moyennes entre 30° et 50° Nord ou Sud,
   - des sites de latitudes inférieures à 30° proches des tropiques et subtropicales,
   - une sélection de sites offrant un espacement en longitude de 20° ou moins et **caractérisé en ce que** l'on réalise la disposition et la mise en réseau des systèmes optiques de veille sur la surface du globe selon les étapes suivantes:

      - on définit un positionnement en longitude des systèmes optiques à partir d'un calcul au moyen d'un ordinateur des durées de revisite de chaque point du globe,
      - on optimise la disposition des systèmes optiques selon une analyse par calculateur des conditions statistiques météo au niveau des intersections desdites latitudes et longitudes pour obtenir une durée maximale de revisite du système au plus égale à une semaine,
      - on dispose les systèmes optiques aux noeuds du maillage constitué selon lesdits positionnements en latitude et en longitude selon un pas adapté à respecter ladite durée maximale de revisite.

2. Procédé de réalisation d'un système de veille spatiale selon la revendication 1 **caractérisé en ce que** la durée maximale de revisite est au plus égale à 2 jours pour 90% de la couverture.

3. Procédé de réalisation d'un système de veille spatiale selon la revendication 1 ou 2 **caractérisé en ce qu'**il comporte une étape de définition de conditions d'observation spécifiques pour chaque système optique de veille en fonction de sa situation géographique adaptées à assurer à chaque système optique un éclairement optimal des objets à détecter.

4. Procédé de réalisation d'un système de veille spatiale selon l'une quelconque des revendications précédentes **caractérisé en ce qu'**on utilise des systèmes optiques à grand champ supérieur ou égal à 5°x5° de préférence supérieur ou égal à 10°x10°.

5. Procédé de réalisation d'un système de veille spatiale selon l'une quelconque des revendications 1 à 4 **caractérisé en ce qu'**on procède à une optimisation des conditions de scrutation des zones du ciel par les systèmes optiques de veille par un pilotage desdits systèmes adapté à leur faire parcourir les zones du ciel 4 à 6 fois plus vite que la vitesse de transit des objets à détecter.

6. Procédé de réalisation d'un système de veille spatiale selon l'une quelconque des revendications précédentes **caractérisé en ce qu'**on configure les systèmes optiques de veille implantés aux noeuds du maillage pour scruter des zones de ciel de 10° à 40° en azimut au dessus de 35° et d'élévation de 10° à 60°.

7. Procédé de réalisation d'un système de veille spatiale selon la revendication 6 **caractérisé en ce qu'**on configure les systèmes optiques de veille implantés aux noeuds du maillage pour scruter des zones de ciel de 20° à 40° en azimut au dessus de 35° et d'élévation de 20° à 60°.

8. Procédé de réalisation d'un système de veille spatiale selon l'une quelconque des revendications 5 à 7 **caractérisé en ce qu'**on configure les systèmes optiques de veille implantés aux noeuds du maillage de façon à parcourir les zones de ciel scrutées avec une fréquence supérieure à 4 fois la durée minimale de transit des objets de la population visée dans lesdites zones de ciel scrutées.

9. Procédé de réalisation d'un système de veille spatiale selon l'une quelconque des revendications précédentes **caractérisé en ce qu'**on dispose les systèmes optiques de veille au niveau de stations implantées sur:

- des sites en Europe continentale, Sud de l'Espagne, en Asie Centrale, sites des observatoires astronomiques existant, au Japon et au sud Canada en sorte de se focaliser sur la plupart des objets d'inclinaison supérieur à 40° tout en détectant les objets sur orbite polaire non SSO;
- des sites dans le Pacifique, Tahiti, Iles Marquises, au Chili, sites de l'ESO, en Afrique de l'Est, Malindi, à Diego Garcia dans l'Océan Indien et sur la côte nord Australienne en sorte de couvrir les orbites équatoriales;
- des sites situés à des latitudes supérieures à 50° nord ou sud, Alaska, station de tracking de Poker-Flat, nord du Canada, Island, Kiruna, Iles Kerguelen et Sud de l'Argentine en sorte de détecter plus particulièrement les objets sur orbite polaires et SSO.

10. Procédé de réalisation d'un système de veille spatiale selon l'une quelconque des revendications précédentes **caractérisé en ce qu'**on équipe chaque station d'un système optique de veille et d'un télescope de suivi.

11. Procédé de réalisation d'un système de veille spatiale selon l'une quelconque des revendications précédentes **caractérisé en ce que** l'on définit pour chaque système optique des conditions d'observation spécifiques en azimut et élévation en fonction de leur situation géographique en sorte d'assurer à chaque système optique un éclairement optimal des objets à détecter.

12. Procédé de réalisation d'un système de veille spatiale selon l'une quelconque des revendications précédentes **caractérisé en ce que** l'on optimise le maillage de telle sorte que ses noeuds se trouvent sur des terres émergées.

13. Procédé de réalisation d'un système de veille spatiale selon la revendication 12 **caractérisé en ce que** l'on optimise le maillage de telle sorte que ses noeuds coïncident avec des lieux comportant une infrastructure préexistante et/ou des stations d'observation spatiale et des sources d'énergie.

## Patentansprüche

1. Verfahren zum Ausführen eines Weltraumüberwachungssystems in LEO-Zonen des Erdorbits, umfassend einen Schritt des Anordnens und des Vernetzens von Stationen optischer Überwachungssysteme auf der Oberfläche der Erdkugel gemäß einer Vermaschung, die dafür geeignet ist, einen effizienten Tageszyklus des Systems von 24 Std. und eine ausgewählte Neubesuchsdauer der beobachteten LEO-Zone zu bieten, wobei für die Vermaschung eine Breitengrad-Positionierung der optischen Systeme gemäß privilegierten Breitengraden ausgehend von den Orbittypen definiert wird, die überwacht werden sollen, und vorgesehen werden:

- Standorte höherer Breitengrade >50° Nord oder Süd,
- Standorte der mittleren Breitengrade zwischen 30° und 50° Nord oder Süd,
- Standorte von Breitengraden unter 30° nahe den tropischen und subtropischen,
- eine Auswahl von Standorten, die eine Längengrad-Beabstandung von 20° oder weniger bieten und **dadurch gekennzeichnet, dass** die Anordnung und die Vernetzung der optischen Überwachungssysteme auf der Oberfläche der Erdkugel gemäß den folgenden Schritten ausgeführt werden:
- es wird eine Längengrad-Positionierung der optischen Systeme anhand einer Berechnung, mittels eines Computers, der Neubesuchsdauern jedes Punktes der Erdkugel definiert,
- die Anordnung der optischen Systeme wird gemäß einer Analyse, durch Rechner, der statistischen Wetterbedingungen im Bereich der Schnittstellen der Breitengrade und Längengrade optimiert, um eine maximale Neubesuchsdauer des Systems von höchstens gleich einer Woche zu erhalten,
- die optischen Systeme werden an den Knoten der gemäß den Breitengrad- und Längengrad-Positionierungen gebildeten Vermaschung gemäß einer Teilung angeordnet, die dazu geeignet ist, die maximale Neubesuchsdauer einzuhalten.

2. Verfahren zum Ausführen eines Weltraumüberwachungssystems nach Anspruch 1, **dadurch gekennzeichnet, dass** die maximale Neubesuchsdauer bei 90 % der Abdeckung höchstens gleich 2 Tage beträgt.

3. Verfahren zum Ausführen eines Weltraumüberwachungssystems nach Anspruch 1 oder 2, **dadurch gekennzeich-**

**net, dass** es einen Schritt des Definierens von spezifischen Beobachtungsbedingungen für jedes optische Überwachungssystem abhängig von seiner geographischen Lage umfasst, die dazu geeignet sind, jedem optischen System eine optimale Ausleuchtung der zu erkennenden Objekte zu gewährleisten.

4.  Verfahren zum Ausführen eines Weltraumüberwachungssystems nach einem der vorstehenden Ansprüche, **dadurch gekennzeichnet, dass** optische Systeme mit einem weiten Feld von größer oder gleich 5°x5°, vorzugsweise größer oder gleich 10°x10° verwendet werden.

5.  Verfahren zum Ausführen eines Weltraumüberwachungssystems nach einem der Ansprüche 1 bis 4, **dadurch gekennzeichnet, dass** mit einer Optimierung der Abtastbedingungen der Zonen des Himmels durch die optischen Überwachungssysteme verfahren wird durch ein Ansteuern der Systeme, das dazu geeignet ist, sie die Zonen des Himmels 4- bis 6-mal schneller durchlaufen zu lassen als die Transitgeschwindigkeit der zu erkennenden Objekte.

6.  Verfahren zum Ausführen eines Weltraumüberwachungssystems nach einem der vorstehenden Ansprüche, **dadurch gekennzeichnet, dass** die optischen Überwachungssysteme, die an den Knoten der Vermaschung aufgestellt sind, dafür konfiguriert werden, Himmelszonen von 10° bis 40° im Azimut oberhalb von 35°, und 10° bis 60° Elevation abzutasten.

7.  Verfahren zum Ausführen eines Weltraumüberwachungssystems nach Anspruch 6, **dadurch gekennzeichnet, dass** die optischen Überwachungssysteme, die an den Knoten der Vermaschung aufgestellt sind, dafür konfiguriert werden, Himmelszonen von 20° bis 40° im Azimut oberhalb von 35°, und von 20° bis 60° Elevation abzutasten.

8.  Verfahren zum Ausführen eines Weltraumüberwachungssystems nach einem der Ansprüche 5 bis 7, **dadurch gekennzeichnet, dass** die optischen Überwachungssysteme, die an den Knoten der Vermaschung aufgestellt sind, so konfiguriert werden, dass sie die abgetasteten Himmelszonen mit einer Frequenz durchlaufen, die mehr als das 4-Fache der minimalen Transitdauer der Objekte der Zielpopulation in den abgetasteten Himmelszonen beträgt.

9.  Verfahren zum Ausführen eines Weltraumüberwachungssystems nach einem der vorstehenden Ansprüche, **dadurch gekennzeichnet, dass** die optischen Überwachungssysteme im Bereich von Stationen angeordnet werden, welche aufgestellt sind an:

    - Standorten in Kontinentaleuropa, im Süden Spaniens, in Zentralasien, Standorten der bestehenden Sternwarten, in Japan und in Südkanada, um sich auf die Mehrzahl der Objekte einer Inklination von mehr als 40° zu konzentrieren, während gleichzeitig die Objekte auf einem polaren Nicht-SSO-Orbit erkannt werden;
    - Standorten im Pazifik, auf Tahiti, den Marquesasinseln, in Chile, Standorten der ESO, in Ostafrika, Malindi, auf Diego Garcia im Indischen Ozean und an der australischen Nordküste, um die äquatorialen Orbits abzudecken;
    - Standorten, die auf Breitengraden von mehr als 50° Nord oder Süd, in Alaska, der Tracking-Station Poker-Flat, im Norden Kanadas, auf Island, in Kiruna, auf den Kerguelen-Inseln und im Süden Argentiniens liegen, um insbesondere die Objekte auf polaren und SSO-Orbits zu erkennen.

10. Verfahren zum Ausführen eines Weltraumüberwachungssystems nach einem der vorstehenden Ansprüche, **dadurch gekennzeichnet, dass** jede Station mit einem optischen Überwachungssystem und einem Verfolgungsteleskop ausgestattet wird.

11. Verfahren zum Ausführen eines Weltraumüberwachungssystems nach einem der vorstehenden Ansprüche, **dadurch gekennzeichnet, dass** für jedes optische System spezifische Beobachtungsbedingungen in Azimut und Elevation abhängig von ihrer geographischen Lage definiert werden, um jedem optischen System eine optimale Ausleuchtung der zu erkennenden Objekte zu gewährleisten.

12. Verfahren zum Ausführen eines Weltraumüberwachungssystems nach einem der vorstehenden Ansprüche, **dadurch gekennzeichnet, dass** die Vermaschung derart optimiert wird, dass sich ihre Knoten auf Landmassen befinden.

13. Verfahren zum Ausführen eines Weltraumüberwachungssystems nach Anspruch 12, **dadurch gekennzeichnet, dass** die Vermaschung derart optimiert wird, dass ihre Knoten mit Orten zusammenfallen, die eine vorbestehende Infrastruktur und/oder Raumwarten und Energiequellen umfassen.

**Claims**

1. Method for realizing a space survey system for the LEO zones of the Earth orbit comprising a step of positioning and placing network stations of optical survey systems over the surface of the globe according to a grid designed to offer an effective daily cycle of the system close to 24 hrs. and a chosen revisit period for the LEO zone observed where one defines for said grid a positioning in latitude of the optical systems according to preferred latitudes based on the orbit types to be monitored, and one provides:

   - high latitude sites, >50° North or South,
   - middle-latitude sites, between 30° and 50° North or South,
   - sites with latitudes less than 30° close to the tropics and subtropics,
   - a selection of sites providing a longitude spacing of 20° or less and **characterized in that** one provides placing and networking of optical survey systems over the surface of the globe is realized according to the following steps:
   - one defines a positioning in longitude of the optical systems based on a computer calculation of the revisit periods of each point of the globe,
   - one optimizes the placing of the optical systems according to a computerized analysis of the statistical weather conditions at the intersections of said latitudes and longitudes to obtain a maximum revisit period for the system equal to one week at most,
   - one places the optical systems at the nodes of the grid formed according to said positionings in latitude and longitude according to a pitch designed to respect said maximum revisit period.

2. Method for realizing a space survey system according to claim 1, **characterized in that** the maximum revisit period is equal at most to 2 days at 90% of the coverage.

3. Method for realizing a space survey system according to claim 1 or 2, **characterized in that** it comprises a step of defining specific observation conditions for each optical survey system according to its geographical situation designed to ensure optimum illumination of the objects to be detected for each optical system.

4. Method for realizing a space survey system according to any one of the preceding claims, **characterized in that** optical systems are used that have a wide field, greater than or equal to 5°x5°, preferably greater than or equal to 10°x10°.

5. Method for realizing a space survey system according to any one of claims 1 to 4, **characterized in that** one proceeds to optimize the conditions for scanning areas of the sky by the optical survey systems via a management of said systems designed to make them cover the areas of the sky 4 to 6 times faster than the transit speed of the objects to be detected.

6. Method for realizing a space survey system according to any one of the preceding claims, **characterized in that** the optical survey systems installed at the nodes of the grid are configured to scan areas of sky of 10° to 40° in azimuth above 35° and with an elevation of 10° to 60°.

7. Method for realizing a space survey system according to claim 6, **characterized in that** the optical survey systems installed at the nodes of the grid are configured to scan areas of sky of 20° to 40° in azimuth above 35° and with an elevation of 20° to 60°.

8. Method for realizing a space survey system according to any one of claims 5 to 7, **characterized in that** the optical survey systems installed at the nodes of the grid are configured so as to traverse the scanned areas of sky at a frequency 4 times greater than the minimum transit period of the objects in the targeted population in said scanned areas of sky.

9. Method for realizing a space survey system according to any one of the preceding claims, **characterized in that** the optical survey systems are placed at stations installed at:

   - sites in continental Europe, southern Spain, on the sites of existing astronomical observatories, in Japan and southern Canada, so as to focus on most of the objects with an inclination greater than 40° while detecting objects in a non SSO polar orbit;
   - sites in the Pacific, Tahiti, the Marquesas Islands, Chile, ESO sites, in East Africa, Malindi, on Diego Garcia in the Indian Ocean and on the north coast of Australia, so as to cover the equatorial orbits;

- sites located at latitudes greater than 50° north or south, Alaska, Poker Flat tracking station, northern Canada, Iceland, Kiruna, Kerguelen Islands and southern Argentina, so as to detect more specifically the objects in an SSO and polar orbit.

10. Method for realizing a space survey system according to any one of the preceding claims, **characterized in that** each station is equipped with an optical survey system and a tracking telescope.

11. Method for realizing a space survey system according to any one of the preceding claims, **characterized in that** for each optical system one defines specific observation conditions of azimuth and elevation according to their geographical situation, so as to ensure optimum illumination of the objects to be detected for each optical system.

12. Method for realizing a space survey system according to any one of the preceding claims, **characterized in that** the grid is optimized such that its nodes are located on land masses.

13. Method for realizing a space survey system according to claim 12, **characterized in that** the grid is optimized such that its nodes coincide with places comprising a pre-existing infrastructure and/or space observation stations and sources of energy.

**Fig. 1**

TMA
F/1.56 10x10°

Fig.2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7319556 B
- US 20090147238 A
- US 2009009897 A
- EP 1772761 A
- US 7045774 B
- US 20070188610 A
- US 20090015914 A

**Littérature non-brevet citée dans la description**

- **NICHOLAS L. JOHNSON.** *U.S. Space Surveillance*